# DEMANDE DE BREVET EUROPEEN

(11) **EP 1 741 589 A1**
(43) Date de publication de la demande: **10.01.2007**
(21) Numéro de dépôt: 06300479.0
(22) Date de dépôt: 17.05.2006
(51) Int. Cl.: B60J 7/14, B60J 7/20

(54) **Véhicule automobile à structure arrière escamotable**

(30) Priorité: 09.06.2005 FR 0505864
(71) Demandeur: PEUGEOT CITROËN AUTOMOBILES S.A., 78140 Velizy Villacoublay (FR)
(72) Inventeur: Groen, Ivo, 78670 Medan (FR)

(57) **Abrégé**

Ce véhicule comprend une caisse sur laquelle est rapportée, de façon mobile, une structure arrière escamotable (3). Cette structure inclut deux vitres latérales de custode (48, 48'), un cadre rigide (38) de support d'une lunette (40) et un élément de toit (32). Pour limiter les contraintes de réalisation de l'extrémité arrière de ce véhicule, en particulier au niveau du coffre arrière du véhicule, chaque vitre de custode (48, 48') est déplaçable par rapport au cadre (38) entre une première position, dans laquelle une partie périphérique (48A, 48A') de la vitre de custode s'étend le long d'un montant latéral (42, 42') du cadre configuré en une position extrême haute qui correspond à la configuration déployée de la structure, et une seconde position, dans laquelle les montants latéraux du cadre, configuré en une position extrême basse qui correspond à la configuration escamotée de la structure, sont disposés entre les faces intérieures respectives (48B, 48B') des vitres de custode.

## Description

La présente invention concerne un véhicule automobile dont une partie arrière, délimitant partiellement l'habitacle du véhicule, est escamotable, le véhicule s'apparentant à un cabriolet lorsque cette partie arrière est escamotée.

Actuellement, de nombreux véhicules automobiles intègrent une structure arrière rapportée de façon mobile sur la caisse fixe du véhicule, entre une configuration déployée, dans laquelle cette structure délimite la zone supérieure de l'arrière de l'habitacle du véhicule, et une configuration escamotée, dans laquelle cette structure est masquée en étant reçue dans un logement interne à la caisse. Généralement, cette structure escamotable inclut une partie du toit du véhicule et deux vitres latérales de custode, ainsi qu'une lunette arrière portée par un cadre rigide juxtaposé à l'arrière du toit lorsque la structure est déployée.

La présence du logement de stockage de la structure escamotée induit des contraintes significatives dans la conception de l'extrémité arrière du véhicule, notamment en ce qui concerne son coffre arrière. En effet, l'escamotage de cette structure, en particulier de son élément de toit, nécessite de dégager au moins partiellement des parois de carrosserie délimitant le coffre arrière du véhicule, le temps que l'élément de toit décrive sa trajectoire d'escamotage. Les aménagements correspondants et les moyens d'entraînement de ces parois de carrosserie occupent une place importante. De plus, même si ces parois de carrosserie incluent le volet du coffre arrière grâce auquel l'utilisateur accède traditionnellement au coffre par l'arrière, les moyens d'entraînement précités doivent être adaptés pour à la fois ouvrir ce volet par l'avant pour permettre l'escamotage de la structure et ouvrir ce volet par l'arrière pour permettre à l'utilisateur d'accéder normalement au coffre arrière de son véhicule, ce qui complique l'agencement et augmente le coût de ces moyens d'entraînement.

Le but de la présente invention est de proposer un véhicule automobile dont la structure arrière escamotable limite les contraintes de réalisation de l'extrémité arrière du véhicule, en particulier au niveau du coffre arrière de ce véhicule.

A cet effet, l'invention a pour objet un véhicule automobile comprenant une caisse et une structure arrière rapportée de façon mobile sur la caisse entre une configuration déployée, dans laquelle la structure délimite une zone supérieure de l'arrière d'un habitacle du véhicule, et une configuration escamotée, dans laquelle la structure est reçue dans un logement de stockage interne à la caisse, laquelle structure arrière inclut deux vitres latérales de custode, un cadre rigide de support d'une lunette arrière et un élément de toit, ce cadre et cet élément de toit passant chacun d'une position extrême haute à une position extrême basse lorsque la structure arrière passe de sa configuration déployée à sa configuration escamotée, caractérisé en ce que, lorsque la structure arrière passe de sa configuration déployée à sa configuration escamotée, chaque vitre de custode est déplaçable par rapport au cadre entre une première position, dans laquelle une partie périphérique de la vitre de custode s'étend le long d'un montant latéral du cadre en position extrême haute, et une seconde position, dans laquelle les montants latéraux du cadre en position extrême basse sont disposés entre les faces intérieures respectives des vitres de custode.

Ainsi, selon l'invention, lorsque la structure arrière est en configuration déployée, les vitres de custode et le cadre équipé de la lunette arrière sont positionnés pour fermer la zone supérieure de l'extrémité arrière de l'habitacle du véhicule. Lors de l'escamotage de la structure, les vitres de custode sont déplacées, depuis leur position initiale, de manière à recevoir, entre leurs faces intérieures respectives, le cadre passé dans sa position basse. Autrement dit, lors de l'escamotage de la structure arrière du véhicule selon l'invention, les vitres de custode sont chacune, dans leur ensemble, à la fois dégagées latéralement vers l'extérieur par rapport au cadre de la lunette arrière, de manière à pouvoir respectivement s'étendre de part et d'autre des montants latéraux du cadre, et amenée vers le bas de manière à occuper un niveau proche de celui du cadre en position basse pour que le cadre soit stocké entre leurs faces intérieures respectives. De la sorte, le cadre de la lunette arrière ne se trouve pas disposé en travers des trajectoires vers le bas des vitres de custode lors de l'escamotage de la structure arrière, tandis que l'espace dégagé par le cadre amené en position basse et par les vitres de custode dégagés vers l'extérieur peut être utilisé pour amener l'élément de toit dans sa position extrême basse. Aucun aménagement particulier supplémentaire de l'extrémité arrière du véhicule n'est alors nécessaire pour permettre l'escamotage de la structure arrière. Notamment, la cinématique d'escamotage des vitres de custode et de l'élément de toit du véhicule selon l'invention peut être prévue pour éviter, contrairement aux véhicules de l'art antérieur, d'ouvrir par l'avant un volet ou analogue de coffre arrière du véhicule, en plus d'une traditionnelle ouverture par l'arrière pour accéder normalement au coffre, ce qui simplifie considérablement les moyens d'entraînement de ce volet ou analogue de coffre arrière.

Suivant d'autres caractéristiques avantageuses de ce véhicule, prises isolément ou suivant toutes les combinaisons techniquement possibles :
- lorsque les vitres de custode sont déplacées de leur première à leur seconde position, leur face intérieure restent en regard l'une de l'autre et la distance séparant ces faces intérieures augmente ;
- la structure arrière inclut des moyens d'entraînement de chaque vitre de custode entre ses première et seconde positions, adaptés pour, lorsque la vitre de custode passe de sa première à sa seconde position, déplacer latéralement vers l'extérieur cette vitre de custode, par rapport à la caisse ;
- pour être déplacé entre ses positions extrêmes haute et basse, le cadre est monté à basculement autour d'un axe sensiblement horizontal, par rapport à la caisse ;
- le déplacement des vitres de custode entre leurs première et seconde positions est commandé par le passage de l'élément de toit entre ses positions extrêmes haute et basse ;
- la structure arrière comporte deux biellettes latérales de commande du déplacement de l'élément de toit entre ses positions extrêmes haute et basse, chaque biellette portant une des vitres de custode et reliant l'élément de toit à la caisse en étant articulé à la fois sur cet élément de toit et sur la caisse ;
- chaque vitre de custode est reliée à la biellette correspondante par un moyen d'articulation situé, le long de la biellette, entre les articulations de la biellette sur l'élément de toit et sur la caisse, la vitre de custode étant montée sur ce moyen d'articulation à la fois à rotation autour d'un axe sensiblement horizontal et transversal à la direction longitudinale de la caisse, et à translation le long de cet axe ;
- lorsque l'élément de toit passe de sa position extrême haute à sa position extrême basse :

- chaque biellette décrit un premier mouvement de rotation autour d'un axe sensiblement horizontal centré sur les articulations des biellettes sur la caisse,
- chaque vitre de custode décrit à la fois un second mouvement de rotation, de sens opposé au premier mouvement de rotation, autour de l'axe défini par les moyens d'articulation, et un mouvement de translation, dirigé vers l'extérieur, le long de cet axe, et
- l'élément de toit décrit un troisième mouvement de rotation autour d'un axe sensiblement horizontal centré sur les articulations des biellettes sur l'élément de toit, ce troisième mouvement de rotation n'étant commandé que lorsque au moins une partie de l'élément de toit est située dans le logement de stockage de la structure arrière ;
- la caisse est munie d'un panneau arrière délimitant rigidement une ouverture traversante de passage de la structure arrière entre ses configurations déployée et escamotée ;
- le panneau arrière est soit relié fixement à la caisse et muni d'un volet d'accès par l'arrière à un coffre arrière du véhicule, ce volet étant articulé par rapport à la caisse de manière indépendante de la structure arrière, soit articulé par rapport à la caisse de manière indépendante de la structure arrière, en formant un panneau d'accès par l'arrière à un coffre arrière du véhicule.

L'invention sera mieux comprise à la lecture de la description qui va suivre, donnée uniquement à titre d'exemple et faite en se référant aux dessins sur lesquels :
- la figure 1A est une vue schématique en élévation d'une partie arrière d'un véhicule selon l'invention, dont la structure arrière escamotable est en configuration déployée ;
- la figure 1 B est une vue en perspective de la structure arrière, représentée seule, de la figure 1A, dans la même configuration qu'à la figure 1A;
- la figure 1C est une vue schématique en élévation prise suivant la flèche I de la figure 1 B, d'une partie latérale seulement de la structure ;
- les figures 2A, 3A et 4A sont des vues analogues à la figure 1A et les figures 2B, 3B et 4B sont des vues analogues à la figure 1 B, les figures 4A et 4B illustrant la structure arrière du véhicule dans sa configuration escamotée, tandis que les figures 2A-2B et 3A-3B illustrent respectivement des configurations intermédiaires de cette structure entre ses configurations déployée et escamotée ; et
- la figure 4C est une vue schématique en élévation suivant la flèche IV de la figure 4B.

Sur les figures est montré l'arrière d'un véhicule automobile 1 dont uniquement certains composants sont représentés pour des raisons de visibilité, et ce, de manière schématique pour mieux comprendre l'invention. Ce véhicule comporte une caisse 2 sur laquelle est agencée une structure arrière escamotable 3. Le terme « caisse » utilisé dans le présent document englobe, de manière générale et non exhaustive, les composants rigides du véhicule agencés essentiellement de manière fixe les uns par rapport aux autres, dont le châssis de base et les éléments de carrosserie du véhicule, ainsi que les ouvrants de ce véhicule.

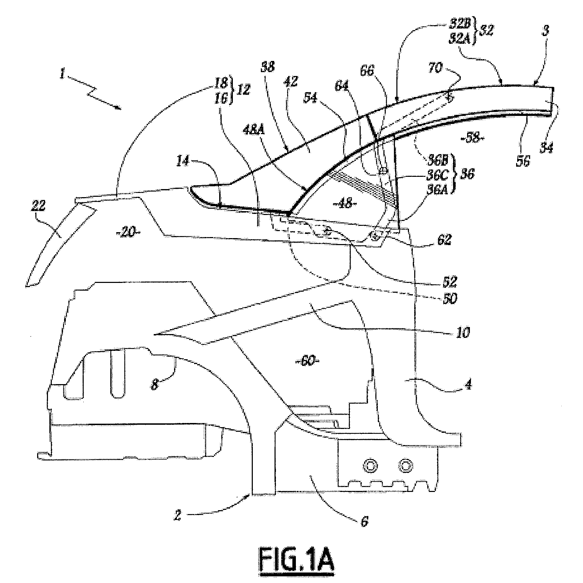

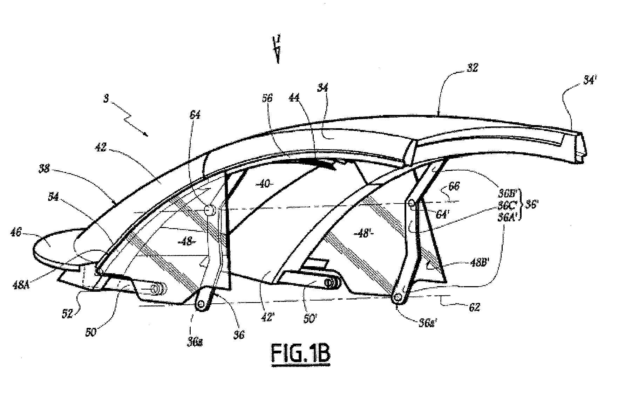

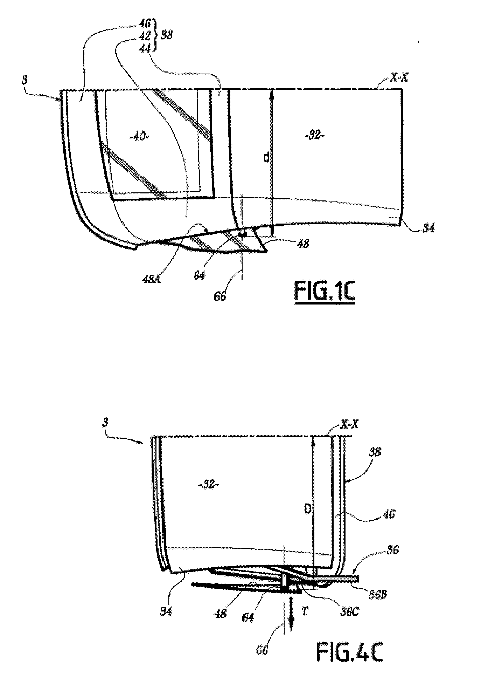

Par commodité, la suite de la description sera orientée par rapport à la caisse 2 du véhicule 1 lorsque ce dernier repose sur le sol en vue de s'y déplacer. Ainsi, les termes « supérieur » et « haut » désignent une direction dirigée à l'opposé du sol et correspondent à la partie haute des figures 1A, 1 B, 2A, 2B, 3A, 3B, 4A et 4B, tandis que les termes « inférieur » et « bas » correspondent à une direction opposée. Le terme « verticale » est utilisé dans le présent document pour désigner une direction sensiblement perpendiculaire au sol sur lequel progresse le véhicule, le terme « horizontale » correspondant à une direction sensiblement perpendiculaire à la verticale ainsi définie. Par ailleurs, les termes « avant » et « arrière » s'entendent par rapport à la direction normale suivant laquelle le véhicule 1 est destiné à avancer et correspondent respectivement à des directions dirigées vers la droite et vers la gauche sur les figures 1A, 1B, 2A, 2B, 3A, 3B, 4A et 4B. De même, les termes « gauche » et « droit » s'entendent par rapport à la direction d'avancée du véhicule, seul le côté droit du véhicule étant ainsi visible sur les figures 1A, 2A, 3A et 4A.

La partie de la caisse 2 représentée aux figures 1A, 2A, 3A et 4A comporte un montant vertical droit 4 qui s'étend en saillie vers le haut depuis un longeron horizontal droit 6 formant à son extrémité arrière un passage de roue 8 pour la roue arrière droite (non représentée) du véhicule 1. La partie intermédiaire du montant 4 est reliée à l'extrémité arrière du longeron 6 par une barre latérale de renfort 10. Des composants analogues aux composants droits de la caisse 2 décrits ci-dessus sont présents, de manière symétrique, au niveau du côté gauche du véhicule 1.

La caisse 2 comporte en outre un panneau de carrosserie arrière 12 sensiblement horizontal et traversé verticalement de part en part par une ouverture 14 située dans la partie d'extrémité avant de ce panneau. Sur les côtés gauche et droit de cette ouverture, le panneau 12 forme des bras 16 dont les extrémités avant respectives sont solidarisées respectivement au montant droit 4 et au montant gauche correspondant de la caisse 2. Ces bras 16 se rejoignent, vers l'arrière du panneau 12, en formant une plaque pleine 18 sensiblement horizontale, qui surplombe les passages de roue droit 8 et gauche correspondant. Juste au-dessous de la plaque 18, la caisse 2 délimite un coffre arrière 20 accessible par l'arrière du véhicule 1, l'extrémité arrière de la plaque 18 étant munie d'un volet d'accès 22 articulé.

La structure arrière escamotable 3 comporte essentiellement :
- un élément de toit 32 formé par exemple d'une tôle globalement plane, légèrement bombée vers le haut et bordée latéralement de montants droit 34 et gauche 34' ; en pratique, cet élément de toit peut être réalisé quasi-totalement ou partiellement en une matière translucide et peut présenter des aménagements courants en ce qui concerne un tel élément de toit escamotable, notamment un habillage intérieur ;
- une paire de biellettes coudées droite 36 et gauche 36', reliant chacune l'élément de toit 32 à la caisse 2 ; chaque biellette 36, 36' comprend, d'une part, un bras inférieur 36A, 36A' qui, à son extrémité libre, est articulé sur le montant correspondant 4 de la caisse, et, d'autre part, un bras supérieur 36B, 36B' qui, à son extrémité libre, est articulé sur la partie courante du montant latéral correspondant 34, 34' de l'élément de toit, en définissant ainsi, de part et d'autre de cette dernière articulation, des parties avant 32A et arrière 32B pour l'élément de toit ;
- un cadre rigide 38 de support d'une lunette arrière transparente 40 ; ce cadre comprend des montants droit 42' et gauche 42, dont les extrémités supérieures respectives sont reliées rigidement par une traverse horizontale 44 tandis que leurs extrémités inférieures respectives sont reliées rigidement par une traverse horizontale 46, ces montants et traverses délimitant entre eux la zone d'implantation de la lunette ; et
- des vitres de custode droite 48 et gauche 48', respectivement reliées par leurs côtés intérieurs aux bras courants 36C, 36C' des biellettes droite 36 et gauche 36'.

Le cadre 38 est relié à la caisse 2 par des bras droit 50 et gauche 50', respectivement solidarisés fixement, à une de leurs extrémités, aux montants droit 42 et gauche 42' du cadre et articulés, à leur extrémité opposée, sur l'extrémité supérieure des montant droit 4 et gauche correspondant de la caisse. La paire de bras 50, 50', et donc l'ensemble du cadre 38 avec sa lunette 40, sont ainsi montés à basculement, par rapport à la caisse, autour d'un axe géométrique commun 52, centré sur les articulations des bras sur la caisse et s'étendant suivant une direction horizontale sensiblement perpendiculaire à la direction longitudinale du véhicule 1.

Les montants 42, 42' du cadre 38 et les montants 34, 34' de l'élément de toit 32 sont respectivement équipés de tampons longitudinaux d'étanchéité 54 et 56, contre lesquels, dans la configuration de la structure 3 des figures 1A, 1 B et 1C, les vitres de custode 48 et 48' sont appliquées en appui, au niveau de leur bord périphérique arrière complémentaire 48A, 48A'. Dans cette configuration de la structure 3, les vitres de custode et le cadre muni de la lunette 40 ferment, de manière sensiblement étanche, la zone supérieure de l'extrémité arrière d'un habitacle intérieur 58 du véhicule 1, couvert par l'élément de toit.

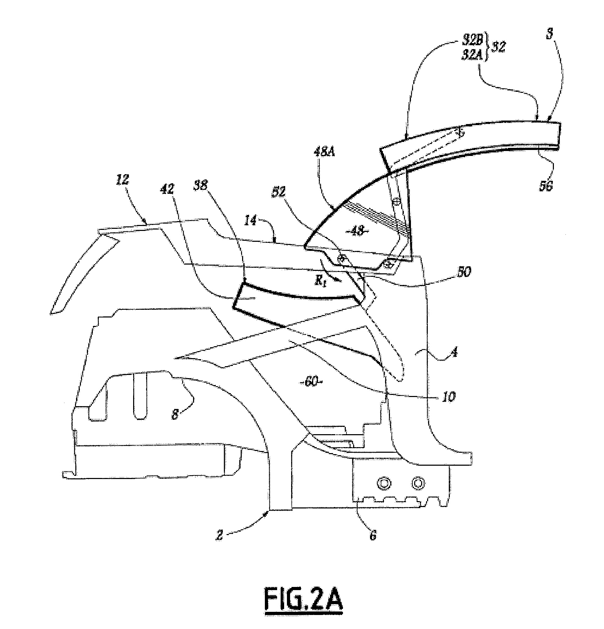

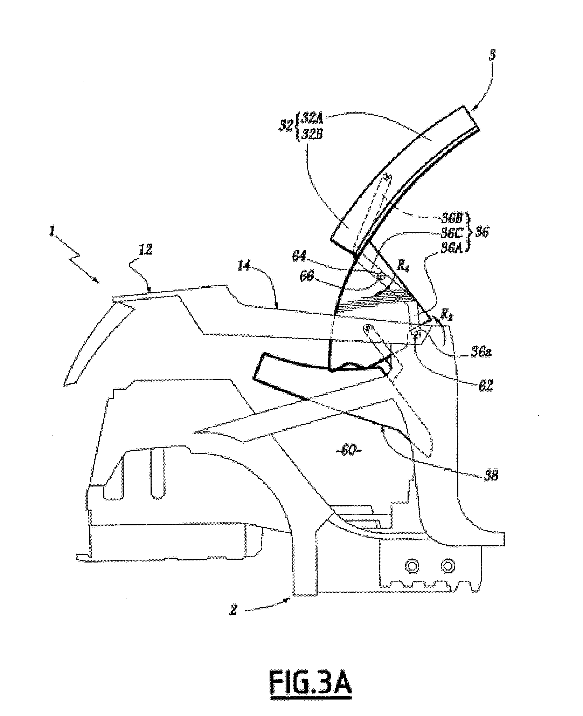

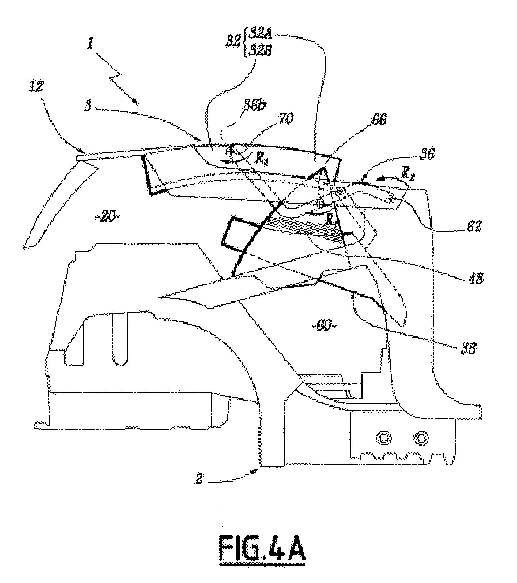

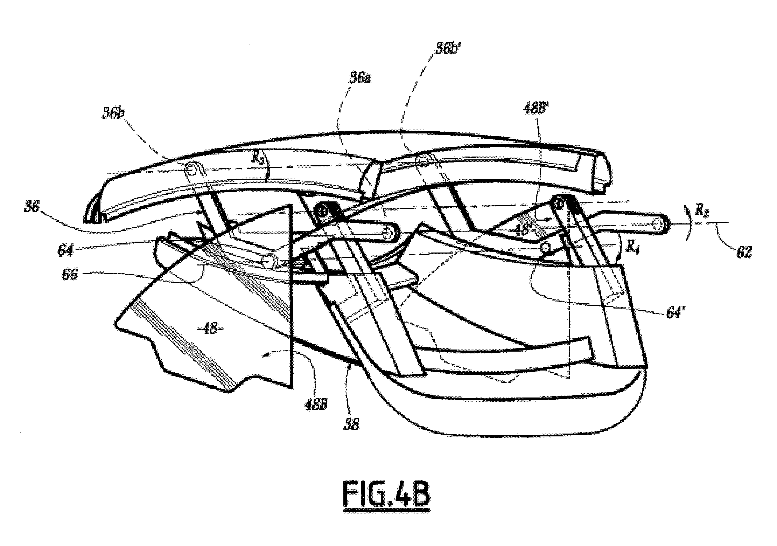

La structure 3 est apte à passer de sa configuration déployée représentée aux figures 1A, 1 B et 1C, dans laquelle elle s'étend pour l'essentiel en saillie vers le haut à partir du panneau arrière 12 et délimite ainsi la partie haute de l'arrière de l'habitacle 58, à une configuration escamotée telle que représentée aux figures 4A, 4B et 4C, dans laquelle cette structure est masquée en étant reçue pour l'essentiel à l'intérieur d'un logement de stockage 60 interne à la caisse 2 et délimité sous le panneau 12, entre les montants verticaux 4 et les passages de roue 8 de la caisse. En passant de sa configuration déployée à sa configuration escamotée, la structure présente des configurations intermédiaires successives, illustrées respectivement aux figures 2A-2B et 3A-3B.

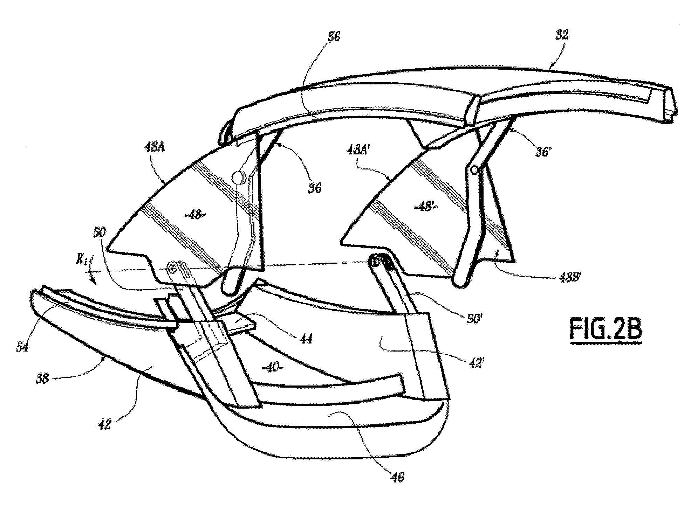

Sur les figures 1A, 1B, 1C, 2A et 2B est illustré l'escamotage du cadre 38 qui, pour passer de sa position haute initiale des figures 1 à sa position basse finale des figures 2, bascule vers l'arrière, c'est-à-dire dans le sens inverse des aiguilles d'une montre sur les figures, autour de l'axe 52, le cadre décrivant alors un mouvement de rotation R₁ dont la course angulaire a une amplitude d'environ 180°. En position haute, les bras 50 et 50' du cadre sont disposés au-dessous des bras 16 du panneau arrière 12. La zone de liaison rigide entre ces bras et la traverse inférieure 46 du cadre s'étend alors en travers de l'ouverture 14, la face supérieure de cette traverse étant en affleurement de la face supérieure de la plaque arrière 18 du panneau 12. Lors de la rotation R₁, les bras 50 et 50' basculent vers le fond du logement 60, tandis que l'ensemble cadre 38/lunette 40 entre progressivement dans ce logement, en passant par l'ouverture 14.

Des figures 2A et 2B aux figues 4A, 4B et 4C est illustré l'escamotage de l'élément de toit 32 à l'intérieur du logement 60. Cette escamotage se décompose cinématiquement en deux mouvements de rotation R₂ et R₃ détaillés ci-après, qui font passer l'élément de toit de sa position extrême haute des figures 2 à sa position extrême basse des figures 4.

Suivant le premier mouvement de rotation R₂, l'élément de toit 32 est basculé vers l'arrière autour d'un axe géométrique 62 sensiblement parallèle à l'axe 52 et centré sur les zones d'articulation 36a, 36a' des biellettes 36 et 36' sur la caisse 2. Ce mouvement de rotation fait passer le bras inférieur 36A, 36A' de chaque biellette d'une position globalement verticale (figures 2A, 2B) à une position globalement horizontale (figures 4A, 4B), moyennant une course angulaire d'environ 90°.

Comme les vitres de custode 48 et 48' sont portées par les biellettes 36 et 36', le mouvement de rotation R₂ provoque leur déplacement de leur position haute initiale des figures 1A, 1B et 1C, à une position basse finale aux figures 4A, 4B et 4C. A cet effet, chaque vitre de custode est reliée à sa biellette associée par un moyen d'articulation 64, 64' adapté pour, à la fois, permettre une rotation relative R₄ entre la vitre de custode et la biellette, en sens opposé à la rotation R₂, et entraîner, sous l'effet de la rotation R₄, la vitre de custode suivant un mouvement de translation horizontale T dirigé vers l'extérieur, par rapport à la biellette. En pratique, ce moyen d'articulation 64, 64' s'apparente à une liaison de type hélicoïdal ou de type « vis-écrou ».

D'un point de vue cinématique, on comprend que l'entraînement de chaque biellette 36, 36' selon la rotation R₂ tend à entraîner, suivant un mouvement de rotation correspondant, chaque vitre de custode 48, 48'. Cet entraînement rotatif est cependant contrecarré par le moyen d'articulation 64, 64' sur lesquels est centré un axe géométrique commun 66 sensiblement parallèle à l'axe 62, autour duquel chaque vitre de custode tourne, par rapport à la biellette correspondante, en sens contraire suivant le mouvement de rotation R₄. En pratique, pour provoquer la rotation relative R₄ en réponse à la rotation R₂, chaque vitre de custode est empêchée de tourner suivant la rotation R₂, ou, tout au moins, cet entraînement rotatif est limité. A ce titre, diverses formes de réalisation destinées à limiter l'entraînement en rotation des vitres de custode par rapport à la caisse 2 lors de la rotation R₂ des biellettes 36, 36' sont envisageables :
- comme représenté sur les figures, en prévoyant que la zone d'implantation de chaque moyen d'articulation 64, 64' se situe dans une partie d'extrémité supérieure de la vitre de custode, le poids de la vitre tend, par inertie gravitaire, à faire basculer cette vitre suivant la rotation R₄, en réaction opposée à la rotation R₂;
- une butée, non représentée, peut être prévue au voisinage de la partie inférieure de chaque vitre de custode, en formant une piste sur laquelle la vitre glisse lors de son escamotage en empêchant son entraînement rotatif lié à R₂, tout en autorisant son mouvement vers le bas, ainsi que son déplacement en translation T ; et/ou
- un ou plusieurs organes élastiques, non représentés, peuvent être agencés entre chaque vitre de custode et la caisse du véhicule, pour rappeler élastiquement la vitre dans sa position angulaire initiale.

De plus, comme indiqué ci-dessus, sous l'effet de la rotation R₄, chaque vitre de custode 48, 48' est translatée, selon le mouvement T, vers l'extérieur par rapport aux biellettes 36, 36'. Autrement dit, les moyens d'articulation droit 64 et gauche 64' écartent respectivement vers la droite la vitre droite 48 vis-à-vis de la biellette droite 36 et vers la gauche la vitre gauche 48' vis-à-vis de la biellette gauche 36', augmentant ainsi la distance transversale séparant les deux vitres de custode.

Les mouvements combinés de rotation R₄ et de translation T imposés aux vitres de custode 48 et 48' par les moyens d'articulation 64 et 64' maintiennent chaque vitre de custode dans une configuration globalement verticale, de sorte que durant leur escamotage, les faces intérieures respectives 48B, 48B' de ces vitres demeurent en regard l'une de l'autre, de manière globalement parallèle, tandis que la distance transversale les séparant augmente, comme il ressort de la comparaison des figures 1C et 4C, sur lesquelles la distance entre la face intérieure 48B de la vitre droite 48 et l'axe longitudinal médian X-X du véhicule 1 est respectivement notée d et D.

L'entraînement en translation T des vitres de custode 48 et 48' est dimensionné pour que ces vitres puissent être amenées, en position basse, de part et d'autre du cadre 38 en position basse d'escamotage des figures 2A et 2B. De la sorte, lors de l'escamotage de la structure 3, le cadre 38 ne gêne pas les mouvements des vitres de custode et, en configuration finale d'escamotage, les montants 42 et 42' de ce cadre sont disposés entre les faces intérieures 48B, 48B' des vitres de custode, dégageant ainsi grandement la zone centrale du logement 60 pour l'escamotage de l'élément de toit 32.

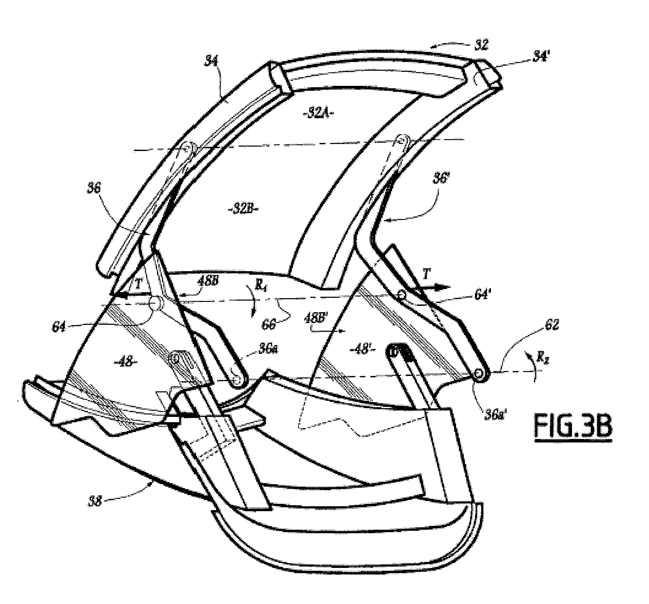

Le second mouvement de rotation R₃ associé à l'escamotage de l'élément de toit 32 consiste à faire basculer cet élément de toit par rapport aux biellettes 36, 36', autour d'un axe géométrique 70 sensiblement parallèle à l'axe 52 et centré sur les zones d'articulation 36b, 36b' de ces biellettes sur les montants 34, 34' de l'élément de toit. Ce mouvement de rotation R₃ entraîne une modification de l'orientation de l'élément de toit par rapport aux bras supérieurs 36B, 36B' des biellettes. En pratique, durant une première phase du premier mouvement de rotation R₂, le bras 36B, 36B' de chaque biellette conserve sa position relative par rapport à l'élément de toit 32, c'est-à-dire que l'articulation de cette biellette vis-à-vis de l'élément de toit n'est pas sollicitée. Le mouvement de rotation R₃ n'est commandé, en addition au premier mouvement de rotation R₂ déjà entamé, qu'à partir de la configuration des figures 3A et 3B, c'est-à-dire à partir d'une configuration intermédiaire de la structure 3, dans laquelle l'élément de toit s'étend globalement suivant une direction inclinée par rapport à l'horizontale, à l'aplomb de l'ouverture traversante 14 du panneau arrière 12. A partir de cette configuration intermédiaire, l'élément de toit est basculé vers l'avant, c'est-à-dire dans le sens des aiguilles d'une montre sur les figures, autour de l'axe 70, pour que l'élément de toit retrouve une position globalement horizontale, analogue à celle qu'il occupait initialement lorsque la structure 3 est dans sa configuration déployée des figures 1. Comme ce mouvement de rotation R₃ est alors combiné au mouvement de rotation R₂, le basculement de la partie arrière 32B de l'élément de toit 32 s'effectue alors que cette partie arrière pénètre dans le logement de stockage 60, en partie dans le volume laissé libre par l'escamotage, suivant la rotation R₁, du cadre 38 et par l'écartement latéral vers l'extérieur, suivant la translation T, des vitres de custode 48 et 48'.

Ce second mouvement de rotation R₃ se poursuit jusqu'à ce que la face supérieure de l'élément de toit 32 vienne sensiblement en affleurement de la face supérieure de la plaque arrière 18 du panneau 12, comme représenté sur la figure 4A. La partie avant 32A de l'élément de toit ferme alors en grande partie l'ouverture 14, tout en laissant libre une partie importante du logement 60 dans le prolongement, vers l'avant, du volume intérieur du coffre 20, pour le transport de bagages ou d'objets divers.

Ainsi, la cinématique d'escamotage de la structure 3, suivant les rotations R₁, R₂, R₃ et R₄ et suivant la translation T, ne nécessite en aucune façon le dégagement de tout ou partie du panneau arrière 12 de la caisse 2, cette structure étant escamotée à l'intérieur du logement 60 en passant exclusivement par l'ouverture traversante fixe 14, comme décrit ci-dessus. L'articulation du volet de coffre arrière 22 est donc indépendante des moyens mécaniques de liaison mobile de la structure 3 à la caisse 2.

Une variante non représentée consiste à prévoir que, contrairement au mode de réalisation décrit jusqu'ici, le panneau arrière 12 est articulé par rapport à la caisse 2, autour d'un axe horizontal de basculement situé par exemple à l'arrière de l'axe 52. Dans ce cas, le volet 22 peut être prévu solidaire du panneau 12, ce dernier formant alors un panneau mobile d'accès par l'arrière au coffre 20 du véhicule. Comme pour le mode de réalisation représenté aux figures, l'articulation de ce panneau de coffre arrière est indépendante de celle de la structure escamotable 3 vis-à-vis de la caisse, ce panneau étant prévu pour ne basculer que dans un seul sens, dans le but d'accéder par l'arrière au coffre 20, tandis qu'il n'a pas à être déplacé lors de l'escamotage de la structure.

Divers autres aménagements et variantes au véhicule 1 décrit ci-dessus sont en outre envisageables, en particulier en ce qui concerne les moyens mécaniques permettant d'obtenir la cinématique d'escamotage détaillée ci-dessus et/ou la synchronisation des mouvements R₁, R₂, R₃, R₄ et T. A titre d'exemples :
- des moyens d'étanchéité, tels que des joints, peuvent être prévus entre les vitres de custode 48, 48' et l'ouverture 14 du logement 60, afin de contribuer au guidage de ces vitres, tout au moins lors du début de leur escamotage, afin de limiter leur porte-à-faux et empêcher leur coincement ;
- dans leur position finale basse, les vitres de custode 48 et 48' sont avantageusement reçues, pour leur partie haute, dans le logement principal 60 et, pour leur partie basse, dans des logements secondaires complémentaires, aménagés de chaque côté gauche et droit de la caisse 2 et délimités partiellement par des ailes latérales de custode (non représentées) rapportées sur la caisse, au niveau de la barre de renfort 10 ; ces logements latéraux secondaires présentent des aménagements analogues à ceux d'un logement prévu dans une porte de véhicule et destiné à recevoir une vitre de cette porte en position basse ; et/ou
- certaines parties de la structure 3 peuvent être réalisées en matière synthétique.

## Revendications

1. Véhicule automobile (1) comprenant une caisse (2) et une structure arrière (3) rapportée de façon mobile sur la caisse entre une configuration déployée (figures 1A, 1B et 1C), dans laquelle la structure délimite une zone supérieure de l'arrière d'un habitacle (60) du véhicule, et une configuration escamotée (figures 4A, 4B et 4C), dans laquelle la structure est reçue dans un logement de stockage (60) interne à la caisse, laquelle structure arrière (3) inclut deux vitres latérales de custode (48, 48'), un cadre rigide (38) de support d'une lunette arrière (40) et un élément de toit (32), ce cadre et cet élément de toit passant chacun d'une position extrême haute à une position extrême basse lorsque la structure arrière passe de sa configuration déployée à sa configuration escamotée, **caractérisé en ce que**, lorsque la structure arrière (3) passe de sa configuration déployée à sa configuration escamotée, chaque vitre de custode (48, 48') est déplaçable par rapport au cadre (38) entre une première position, dans laquelle une partie périphérique (48A, 48A') de la vitre de custode s'étend le long d'un montant latéral (42, 42') du cadre en position extrême haute, et une seconde position, dans laquelle les montants latéraux du cadre en position extrême basse sont disposés entre les faces intérieures respectives (48B, 48B') des vitres de custode.

2. Véhicule suivant la revendication 1, **caractérisé en ce que**, lorsque les vitres de custode (48, 48') sont déplacées de leur première à leur seconde position, leur face intérieure (48B, 48B') restent en regard l'une de l'autre et la distance (d/D) séparant ces faces intérieures augmente.

3. Véhicule suivant l'une des revendications 1 ou 2, **caractérisé en ce que** la structure arrière (3) inclut des moyens (36, 36', 64, 64') d'entraînement de chaque vitre de custode (48, 48') entre ses première et seconde positions, adaptés pour, lorsque la vitre de custode passe de sa première à sa seconde position, déplacer latéralement vers l'extérieur cette vitre de custode, par rapport à la caisse (2).

4. Véhicule suivant l'une quelconque des revendications précédentes, **caractérisé en ce que**, pour être déplacé entre ses positions extrêmes haute et basse, le cadre (38) est monté à basculement (R₁) autour d'un axe sensiblement horizontal (52), par rapport à la caisse (2).

5. Véhicule suivant l'une quelconque des revendications précédentes, **caractérisé en ce que** le déplacement des vitres de custode (48, 48') entre leurs première et seconde positions est commandé par le passage de l'élément de toit (32) entre ses positions extrêmes haute et basse.

6. Véhicule suivant la revendication 5, **caractérisé en ce que** la structure arrière (3) comporte deux biellettes latérales (36, 36') de commande du déplacement de l'élément de toit (32) entre ses positions extrêmes haute et basse, chaque biellette portant une des vitres de custode (48, 48') et reliant l'élément de toit à la caisse (2) en étant articulé à la fois sur cet élément de toit et sur la caisse.

7. Véhicule suivant la revendication 6, **caractérisé en ce que** chaque vitre de custode (48, 48') est reliée à la biellette correspondante (36, 36') par un moyen d'articulation (64, 64') situé, le long de la biellette, entre les articulations de la biellette sur l'élément de toit (32) et sur la caisse (2), la vitre de custode étant montée sur ce moyen d'articulation à la fois à rotation (R₄) autour d'un axe (66) sensiblement horizontal et transversal à la direction longitudinale (X-X') de la caisse, et à translation (T) le long de cet axe.

8. Véhicule suivant la revendication 7, **caractérisé en ce que**, lorsque l'élément de toit (32) passe de sa position extrême haute à sa position extrême basse :
- chaque biellette (36, 36') décrit un premier mouvement de rotation (R₂) autour d'un axe sensiblement horizontal (62) centré sur les articulations des biellettes sur la caisse (2),
- chaque vitre de custode (48, 48') décrit à la fois un second mouvement de rotation (R₄), de sens opposé au premier mouvement de rotation (R₂), autour de l'axe (66) défini par les moyens d'articulation (64, 64'), et un mouvement de translation (T), dirigé vers l'extérieur, le long de cet axe (66), et
- l'élément de toit (32) décrit un troisième mouvement de rotation (R₃) autour d'un axe sensiblement horizontal (70) centré sur les articulations des biellettes sur l'élément de toit, ce troisième mouvement de rotation n'étant commandé que lorsque au moins une partie (32B) de l'élément de toit est située dans le logement (60) de stockage de la structure arrière (3).

9. Véhicule suivant l'une quelconque des revendications précédentes, **caractérisé en ce que** la caisse (2) est munie d'un panneau arrière (12) délimitant rigidement une ouverture traversante (14) de passage de la structure arrière (3) entre ses configurations déployée et escamotée.

10. Véhicule suivant la revendication 9, **caractérisé en ce que** le panneau arrière (12) est soit relié fixement à la caisse (2) et muni d'un volet (22) d'accès par l'arrière à un coffre arrière (20) du véhicule (1), ce volet étant articulé par rapport à la caisse de manière indépendante de la structure arrière (3), soit articulé par rapport à la caisse de manière indépendante de la structure arrière, en formant un panneau d'accès par l'arrière à un coffre arrière du véhicule.
